Europäisches Patentamt

European Patent Office

Office européen des brevets

(19)

(11) EP 0 911 254 A2

(12) EUROPEAN PATENT APPLICATION

(43) Date of publication:
28.04.1999 Bulletin 1999/17

(51) Int Cl.⁶: **B63B 9/00**, G01M 10/00, F15D 1/12

(21) Application number: 98402626.0

(22) Date of filing: 22.10.1998

(84) Designated Contracting States:
**AT BE CH CY DE DK ES FI FR GB GR IE IT LI LU MC NL PT SE**
Designated Extension States:
**AL LT LV MK RO SI**

(30) Priority: 24.10.1997 JP 292999/97

(71) Applicants:
• **Ishikawajima-Harima Heavy Industries Co., Ltd.**
**Chiyoda-ku, Tokyo (JP)**
• **Kato, Hiroharu**
**Matsudo-shi, Chiba-ken (JP)**

(72) Inventors:
• **Takahashi, Yoshiaki**
**Tokyo (JP)**
• **Yoshida, Yuki**
**Kawasaki-shi, Kanagawa-ken (JP)**
• **Kato, Hiroharu**
**Matsudo-shi, Chiba-ken (JP)**

(74) Representative: **Des Termes, Monique et al**
**c/o Société de Protection des Inventions**
**25, rue de Ponthieu**
**75008 Paris (FR)**

(54) **Simulation method for bubble envelopment of a ship**

(57) A computer simulation of bubbles enveloping a ship is performed by a. calculating a turbulent flow energy and an energy loss caused by an energy dissipation factor as well as an average fluid velocity in each of cells defined by three-dimensional orthogonal lattices constructed in a flow field including a turbulent boundary layer formed about a submerged surface of the ship; b. simulating a generation and ejection of a bubble into the turbulent flow layer at a given time from a given jet outlet with a given initial bubble velocity; c. calculating directional bubble velocities in each of cells according to the turbulent flow energy, the energy dissipation factor, the average fluid velocity and random numbers; d. calculating a bubble location at a succeeding unit time by solving equations of motion according to the directional bubble velocities and average fluid velocity; e. calculating a void fraction in each of cells according to the bubble location at the succeeding unit time; f. repeating step c to step e for another bubble for a given number of iterations until an integer time is reached by incrementing a time parameter by a unit time; and g. calculating distribution of void fractions in all cells to represent an overall distribution of bubbles at the integer time, and terminating computation when it is decided that the distribution of bubbles is converging.

FIG.3

START

SELECT INITIAL BUBBLE LOCATION AND INITIAL BUBBLE VELOCITY ∿ S 1

CALCULATE DIRECTIONAL VELOCITIES BY RANDOM NUMBERS ∿ S 2

S 3 IS THE BUBBLE REMOTE FROM SHIP — NO → S 5 INITIALE SELECTION OF VERTICALE FORCE — S 6 BUBBLE LOCATION AT SUCCEEDING UNIT TIME BY INTEGRATING EQUATIONS OF MOTION

YES — S 4

BUBBLE LOCATION AT SUCCEEDING UNIT TIME BY INTEGRATING EQUATIONS OF MOTION

INCREMENT UNIT TIME S 1 3 — S 1 2

CORRECTION OF VERTICALE FORCE S 8 NO — S 7 RESTRICTION CONDITIONS SATISFIED? — YES

CHANGE INITIAL LOCATION OF BUBBLE

S 9 NO VERTICAL FORCE<0? — YES

S 1 0 IS THE BUBBLE BELOW STATIONARY WATER? — NO

YES — S 1 1 CALCULATE VOID FRACTION

a

S 1 4 NO — IS VOID FRACTION CONVERGED?

YES

END

**Description**

BACKGROUND OF THE INVENTION

Field of the Invention

The present invention relates to a method and an apparatus for numerical simulation of skin friction reduction by enveloping a ship with bubbles and to a computer-readable memory medium having a simulation program recorded, and relates in particular to a friction-reduction technology by jetting micro-bubbles into the boundary layer to envelope the submerged surfaces of a ship.

Description of the Related Art

Technologies related to reduction of skin-friction are disclosed in Japanese Patent Applications, First Publications, S50-83992; S53-136289; S60-139586; S61-71290; as well as in Practical Utility Model Applications, S61-39691; and 561-128185. Friction-reducing ships presented in these publications are based on jetting a gas such as air from a cruising ship into water to produce micro-bubbles (bubbles hereinbelow) in the boundary layer between the ship and water to reduce the skin-friction by the effect of those bubbles enveloping the submerged surfaces.

One of the well known simulation technique is a computed fluid dynamics (CFD) method. This method is based on solving three-dimensional Navier-Stokes equations describing viscous flow fields directly or approximately by numerical analysis. Turbulent flow over the ship surface is modeled numerically (turbulent modeling) by dividing the flow fields including the turbulent boundary layer into a plurality of orthogonal three-dimensional lattices (cells) so that three-dimensional Navier-Stokes equations can be solved in individual cells to compute the turbulent flow energy and an energy dissipation factor (a proportion of energy loss due to frictional heat) in each cell. Such numeral simulation studies of turbulent flow field around the ship surface enables to design a friction-reducing ship with minimal experimentations.

However, existing simulation methods are designed to provide qualitative flow patterns around the ship surface, and consequently, they are not capable of providing quantitative data on the distribution of bubbles existing in the boundary layer between the ship and water, i.e., how the bubbles are actually enveloping the ship. For this reason, it has been difficult to theoretically evaluate various technologies for skin-friction effects, thus leaving no other choice for the investigators but experimental approaches. Such experimental studies of friction reduction effects are immensely expensive in terms of time and labor. Especially, it has not been possible to perform theoretical computation of friction reduction effects caused by the presence of bubbles, and to provide a theoretical estimate of horsepower required to drive a friction-reducing ship.

SUMMARY OF THE INVENTION

The present invention provides an approach to solving many of the foregoing problems under several objectives outlined below.

   a. To provide a method and an apparatus to simulate bubbles enveloping a ship by computing distribution data of bubbles generated by jetting a gas from a cruising ship according to an application program, and a computer-readable memory medium comprised by the simulation program.
   b. To provide a method and an apparatus to simulate bubbles enveloping a ship so as to enable theoretical evaluation of skin-friction reduction technologies according to an application program, and a computer-readable memory medium comprised by the simulation program.
   c. To provide a method and an apparatus to simulate bubbles enveloping a ship so as to enable theoretical evaluation of skin-friction reduction technologies at low cost, according to an application program, and a computer-readable memory medium comprised by the simulation program.
   d. To provide a method and an apparatus to simulate bubbles enveloping a ship of any shape according to an application program, and a computer-readable memory medium comprised by the simulation program.

Therefore a simulation method is comprised by the steps of:

   a. dividing a flow field including a turbulent boundary layer formed about a submerged surface of the ship into three-dimensional orthogonal lattices to form cells and calculating a turbulent flow energy, an energy dissipation factor and an average fluid velocity in each of the cells;
   b. ejecting a bubble into the turbulent flow layer with a given initial bubble velocity from a given jet outlet at a given instant of time;

c. calculating directional bubble velocities in each of the cells according to the turbulent flow energy, the energy dissipation factor, the average fluid velocity and random numbers;

d. calculating a bubble location at a succeeding unit time by solving equations of motion according to the directional bubble velocities and average fluid velocity;

e. calculating a void fraction in each of the cells according to the bubble location at the succeeding unit time;

f. repeating step c to step e for a given number of iterations until an integer time is reached by incrementing a time parameter by a unit time; and

g. calculating distribution of void fractions in all cells to represent an overall distribution of bubbles at the integer time, and terminating computation when it is decided that the distribution of bubbles is converging.

An apparatus to perform the simulation method is comprised by means to perform analytical steps of:

a. dividing a flow field including a turbulent boundary layer formed about a submerged surface of the ship into three-dimensional orthogonal lattices to form cells and calculating a turbulent flow energy, an energy dissipation factor and an average fluid velocity in each of the cells;

b. ejecting a bubble into the turbulent flow layer with a given initial bubble velocity from a given jet outlet at a given instant of time;

c. calculating directional bubble velocities in each of the cells according to the turbulent flow energy, the energy dissipation factor, the average fluid velocity and random numbers;

d. calculating a bubble location at a succeeding unit time by solving equations of motion according to the directional bubble velocities and average fluid velocity;

e. calculating a void fraction in each of the cells according to the bubble location at the succeeding unit time;

f. repeating step c to step e for a given number of iterations until an integer time is reached by incrementing a time parameter by a unit time; and

g. calculating distribution of void fractions in all cells to represent an overall distribution of bubbles at the integer time, and terminating computation when it is decided that the distribution of bubbles is converging.

And a memory medium is comprised by an application program to perform the steps of:

a. dividing a flow field including a turbulent boundary layer formed about a submerged surface of the ship into three-dimensional orthogonal lattices to form cells and calculating a turbulent flow energy, an energy dissipation factor and an average fluid velocity in each of the cells;

b. ejecting a bubble into the turbulent flow layer with a given initial bubble velocity from a given jet outlet at a given instant of time;

c. calculating directional bubble velocities in each of the cells according to the turbulent flow energy, the energy dissipation factor, the average fluid velocity and random numbers;

d. calculating a bubble location at a succeeding unit time by solving equations of motion according to the directional bubble velocities and average fluid velocity;

e. calculating a void fraction in each of the cells according to the bubble location at the succeeding unit time;

f. repeating step c to step e for a given number of iterations until an integer time is reached by incrementing a time parameter by a unit time; and

g. calculating distribution of void fractions in all cells to represent an overall distribution of bubbles at the integer time, and terminating computation when it is decided that the distribution of bubbles is converging.

The approaches summarized above enable to simulate bubbles enveloping a ship by quantitative data which has not been possible with the existing approaches. Accordingly, it is now possible to theoretically evaluate various skin-friction reduction technologies to realize a friction-reducing ship at high efficiency and low cost. The adoption of a $\kappa$ - $\varepsilon$ model ( $\kappa$ :the turbulent flow energy, $\varepsilon$ :the energy dissipation factor) enables to simulate the flow on the submerged hull surfaces using CFD data.

BRIEF DESCRIPTION OF THE DRAWINGS

Figure 1 shows the coordinate system used in the basic theory.

Figure 2 is an illustration of a bubble distribution used in computation.

Figure 3 is a flowchart of the method.

Figure 4 is a graph showing a convergence state of void fraction distributions after a low number of iterations.

Figure 5 is a graph showing converged void fraction distribution.

Figure 6 is a first distribution graph for the bubble diameter of 500 $\mu$m showing the computational results of void fraction distributions in the girth direction of the ship at various longitudinal locations.

Figure 7 is a second distribution graph for the bubble diameter of 500 $\mu$m showing the computational results of void fraction distributions in the girth direction of the ship at various longitudinal locations.

Figure 8 is a third distribution graph for the bubble diameter of 500 $\mu$m showing the computational results of void fraction distributions in the girth direction of the ship at various longitudinal locations.

Figure 9 is a fourth distribution graph the bubble diameter of 500 $\mu$m showing the computational results of void fraction distributions in the girth direction of the ship at various longitudinal locations.

Figure 10 is a graph showing computational results of enveloping the ship with bubbles.

Figure 11 is a first distribution graph the bubble diameter of 1,000 $\mu$m showing the computational results of void fraction distributions in the girth direction of the ship at various longitudinal locations.

Figure 12 is a second distribution graph the bubble diameter of 1,000 $\mu$m showing the computational results of void fraction distributions in the girth direction of the ship at various longitudinal locations.

Figure 13 is a third distribution graph the bubble diameter of 1,000 $\mu$m showing the computational results of void fraction distributions in the girth direction of the ship at various longitudinal locations.

Figure 14 is a fourth distribution graph the bubble diameter of 1,000 $\mu$m showing the computational results of void fraction distributions in the girth direction of the ship at various longitudinal locations.

DESCRIPTION OF THE PREFERRED EMBODIMENTS

First, the basic theory in the simulation method of the present invention will be explained.

The method is based on a CFD analysis based on a $\kappa$ - $\varepsilon$ model of flow data in a given cell generated on the hull surfaces of a ship, where $\kappa$ is the turbulent flow energy and $\varepsilon$ is the energy dissipation factor. Derived values of $\kappa$ and $\varepsilon$ are applied in the kinetic equations of bubble motion shown below to compute the number of bubbles existing in individual cells surrounding the submerged surfaces, thereby arriving at the overall bubble distributions on the hull surfaces.

1. Justification for applying Monte Carlo Methods

In the present invention, a form of Monte Carlo Methods based on a direct simulation method using random numbers is adopted as a solution to a scatter equation of kinetic bubbles in flow fields including a turbulent boundary layer. Justification for using Monte Carlo Methods for solving the dispersion equation will be explained first.

Assume that bubbles move from a cell to a cell randomly in a unit time. A bubble at a point (i, j, k) at a given time will move to one of the following six points after a passage of one unit time.

point ① (i-1,j,k)
point ② (i+1,j, k)
point ③ (i,j-1, k)
point ④ (i,j+1,k)
point ⑤ (i,j, k-1)
point ⑥ (i,j,k+1)

If it is assumed that the bubble will move to another cell in a unit time, independent of the past path history, then a probability that a bubble starting from the origin (i=0, j=0, k=0) will arrive at a point (i,j, k) after an interval of n unit times may be regarded as a concentration value at that given time n. This concentration is expressed as $P^n_{i,j,k}$ For the bubble to reach the point (i,j, k) at a time of n+1 unit times, it is necessary that the bubble be at one of the above six points at a time of n unit times.

The probability of the bubble from one of the six points to the point (i,j, k) is 1/6, therefore the following recurrence formula can be established:

$$P^{n+1}_{i,j,k} = (P^n_{i,j,k+1} + P^n_{i,j,k-1} + P^n_{i,j+1,k} + P^n_{i,j-1,k} + P^n_{i+1,j,k} + P^n_{i-1,j,k})/6 \qquad (1)$$

The difference between equation (1) and a concentration $P^n_{i,j,k}$ at a unit time earlier, equation (2) is obtained:

$$P^{n+1}_{i,j,k} - P^{n}_{i,j,k}$$

$$= \{( P^{n}_{i,j,k+1} - P^{n}_{i,j,k}) + (P^{n}_{i,j,k-1} - P^{n}_{i,j,k})\}/6$$

$$+ \{( P^{n}_{i,j+1,k} - P^{n}_{i,j,k}) + (P^{n}_{i,j-1,k} - P^{n}_{i,j,k})\}/6$$

$$+ \{( P^{n}_{i+1,j,k} - P^{n}_{i,j,k}) + (P^{n}_{i-1,j,k} - P^{n}_{i,j,k})\}/6 \qquad (2)$$

If the bubble velocity is zero, a dispersion equation in an isotropic turbulent flow may be considered as in equation (3), for a variable bubble concentration P and a dispersion coefficient D:

$$\frac{\partial P}{\partial t} = D\left(\frac{\partial^2 P}{\partial x^2} + \frac{\partial^2 P}{\partial y^2} + \frac{\partial^2 P}{\partial z^2}\right) \qquad (3)$$

When equation (3) is rewritten as a difference equation between a concentration $P^{n}_{i,j,k}$ at time n and a concentration $P^{n+1}_{i,j,k}$ at time n+1, equation (4) is obtained.

$$\frac{P^{n+1}_{i,j,k} - P^{n}_{i,j,k}}{\Delta t}$$

$$= \frac{D}{\Delta x}\left\{(\frac{P^{n}_{i+1,j,k} - P^{n}_{i,j,k}}{\Delta x}) - (\frac{P^{n}_{i,j,k} - P^{n}_{i-1,j,k}}{\Delta x})\right\}$$

$$+ \frac{D}{\Delta y}\left\{(\frac{P^{n}_{i,j+1,k} - P^{n}_{i,j,k}}{\Delta y}) - (\frac{P^{n}_{i,j,k} - P^{n}_{i,j-1,k}}{\Delta y})\right\} \qquad (4)$$

$$+ \frac{D}{\Delta z}\left\{(\frac{P^{n}_{i,j,k+1} - P^{n}_{i,j,k}}{\Delta z}) - (\frac{P^{n}_{i,j,k} - P^{n}_{i,j,k-1}}{\Delta z})\right\}$$

Here, if the turbulent flow is isotropic, from the definition of dispersion coefficient, equation (5) is established:

$$D \equiv \langle u \cdot l \rangle$$

$$= \Delta x \cdot \Delta x/6\Delta t$$

$$= \Delta y \cdot \Delta y/6\Delta t$$

$$= \Delta z \cdot \Delta z/6\Delta t \qquad (5)$$

where the brackets < > indicate a collective average (ensemble average) of all the bubbles involved in the dispersion process. "u" is a deviation from an average bubble velocity value of bubbles, and "l" is a deviation in displacement.
Substituting equation (5) into equation (4) results in equation (6). This equation (6) matches equation (2) describing the random motion of bubbles. Therefore, it is possible to solve dispersion equations in an isotropic turbulent flow using a Monte Carlo Methods which directly simulates bubble motion using random numbers.

$$P^{n+1}_{i,j,k} - P^{n}_{i,j,k}$$

$$= \frac{1}{6} \left\{ (P^{n}_{i+1,j,k} - P^{n}_{i,j,k}) - (P^{n}_{i,j,k} - P^{n}_{i-1,j,k}) \right\}$$

$$+ \frac{1}{6} \left\{ (P^{n}_{i,j+1,k} - P^{n}_{i,j,k}) - (P^{n}_{i,j,k} - P^{n}_{i,j-1,k}) \right\}$$

$$+ \frac{1}{6} \left\{ (P^{n}_{i,j,k+1} - P^{n}_{i,j,k}) - (P^{n}_{i,j,k} - P^{n}_{i,j,k-1}) \right\} \tag{6}$$

2. Motion of Bubbles within a cell and Void Fraction

In this section, the use of CFD data to compute flow fields by expressing turbulent flow in terms of $\kappa$ - $\varepsilon$ will be examined. It is assumed that the turbulent flow data within a cell are uniform and isotropic, and the overall flow in the boundary layer about the ship can be described by an aggregate distribution of flows in individual cells. In the present study, bubble motions are expressed by the following kinetic equations using the condition that the turbulent flows are uniform and isotropic within a cell.

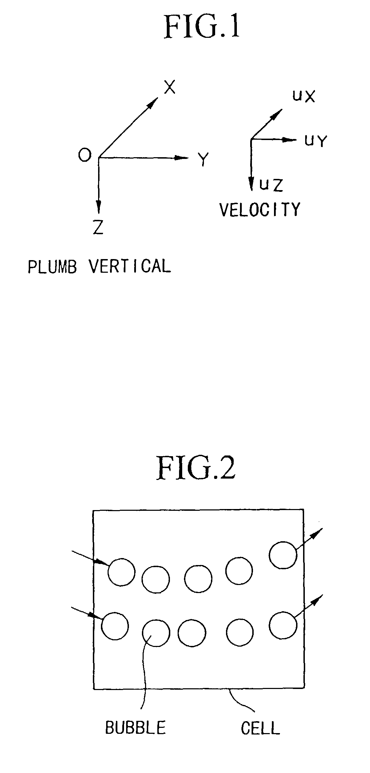

Figure 1 shows the basic coordinate system for describing the equations of bubbles motion. The XYZ-O system is a solid coordinate space, and Z-axis is the plumb vertical direction. Velocity parameters $u_x$, $u_y$, $u_z$ are average fluid velocities (in this case water velocity surrounding the ship) in the X-, Y- and Z-directions, respectively. This coordinate system will be used in the following to explain: (1) equations of motion when the bubbles are remote from the ship surface; (2) equations of motion when the bubbles are sticking to the ship surface; (3) effects of turbulent dispersion; and (4) definition of void fraction.

(1) Equations of motion when the bubbles are remote from the ship

Within a cell, it is assumed that the bubble flow data are uniform and isotropic, but in the neighboring cells, the effects of velocity gradient and pressure gradient on the bubble movement will be taken into consideration. A method of incorporating such effects is described in a reference, by Meng J.C.S and Uhlman J.S. Jr."Micro-bubble formulation and splitting in a turbulent boundary layer for Turbulence Reduction. A Symposium in Honor of Maurice Holt on His 70th Birthday, Willamsburg, Va. pp, 168-217", 1989.

According to this method, the effects of velocity gradient is approximated by a lift force L which acts on a solid sphere (Saffman lift) where the solid sphere is replaced with a bubble in this study. Equation (7) expresses the lift force L in terms of a liquid density $\rho$ (kg/m$^3$), fluid velocity U (m/s), a bubble radius R (m), and a kinetic viscosity coefficient $\nu$ (m$^2$/s). For details of Saffman lift, refer to "The lift on a small sphere in a slow shear flow, JFM, vol. 22" by Saffman.

$$L = 6.46 \, \rho \cdot U \cdot R^2 \, (\nu \frac{\partial U}{\partial n})^{1/2} \tag{7}$$

The effects of a pressure gradient are approximated by equation (8) where Fi is a force exerted in the i-direction by a pressure gradient; V is a volume of a single bubble (m$^3$); Pr is a time-averaged pressure; and $x_i$ is a displacement in the i-direction.

$$F_i = -V \frac{\partial Pr}{\partial x_i} \tag{8}$$

Accordingly, equations of motion for bubbles within a cell in the coordinate system are expressed in equations (9)~(11) in X-, Y- and Z-directions, where $u_x$, $u_y$, and $u_z$ are average velocities of water (m/s) in the X-, Y- and Z-directions, $u'_x$, $u'_y$, and $u'_z$ are average velocities for directional bubble flows, m is a mass of a bubble (kg), $m_A$ is an addition mass (kg), $\mu$ is a static viscosity coefficient (m$^2$/s), and g is gravitational acceleration (m/s$^2$).

$$(m + m_A)\ddot{X} = 6\pi \mu (u_x + u'_x - \dot{X})R$$
$$+ 6.46\rho R^2 \nu^{1/2}\left\{(u_y + u'_y - \dot{Y})(\frac{\partial u_y}{\partial x})^{1/2} + (u_z + u'_z - \dot{Z})(\frac{\partial u_z}{\partial x})^{1/2}\right\} - V\frac{\partial Pr}{\partial x} \qquad (9)$$

$$(m + m_A)\ddot{Y} = 6\pi \mu (u_y + u'_y - \dot{Y})R$$
$$+ 6.46\rho R^2 \nu^{1/2}\left\{(u_z + u'_z - \dot{Z})(\frac{\partial u_z}{\partial y})^{1/2} + (u_x + u'_x - \dot{X})(\frac{\partial u_x}{\partial y})^{1/2}\right\} - V\frac{\partial Pr}{\partial y} \qquad (10)$$

$$(m + m_A)\ddot{Z} = 6\pi \mu (u_z + u'_z - \dot{Z})R - \rho gV + mg$$
$$+ 6.46\rho R^2 \nu^{1/2}\left\{(u_x + u'_x - \dot{X})(\frac{\partial u_x}{\partial z})^{1/2} + (u_y + u'_y - \dot{Y})(\frac{\partial u_y}{\partial z})^{1/2}\right\} - V\frac{\partial Pr}{\partial z} \qquad (11)$$

In other words, equations of motion of bubbles in the three coordinate directions are developed by expressing the directional turbulent flow velocities as a function of a sum of the average fluid velocity and the directional bubble flow velocity. In these equations (9)~(11), the first term on the right hand side of the equation is selected by using Stokes approximation for solid sphere.

(2) Equations of motion when the bubbles are sticking to the ship

When the bubbles are sticking to the ship, reactive forces on the bubbles are an effective vertical force and a frictional force. Therefore, the equations of motion can be derived from equations (9)~(11) as equations (12)~(14).
In equations (12)~(14), Nx, Ny, Nz are effective vertical force (in Newton), and Fx, Fy, Fz are frictional forces (in Newton).

$$(m + m_A)\ddot{X} = 6\pi \mu (u_x + u'_x - \dot{X})R$$
$$+ 6.46\rho R^2 \nu^{1/2}\left\{u_y + u'_y - \dot{Y})(\frac{\partial u_y}{\partial x})^{1/2} + (u_z + u'_z - \dot{Z})(\frac{\partial u_z}{\partial x})^{1/2}\right\} - V\frac{\partial Pr}{\partial x} + N_x + F_x \qquad (12)$$

$$(m + m_A)\ddot{Y} = 6\pi \mu (u_y + u'_y - \dot{Y})R$$
$$+ 6.46\rho R^2 \nu^{1/2}\left\{(u_z + u'_z - \dot{Z})(\frac{\partial u_z}{\partial y})^{1/2} + (u_x + u'_x - \dot{X})(\frac{\partial u_x}{\partial y})^{1/2}\right\} - V\frac{\partial Pr}{\partial y} + Ny + Fy \qquad (13)$$

$$(m + m_A)\ddot{Z} = 6\pi\,\mu(u_z + u'_z - \dot{Z})R - \rho\,gV + m\,g$$

$$+ 6.46\rho R^2 \nu^{1/2}\left\{(u_x + u'_x - \dot{X})(\frac{\partial u_x}{\partial z})^{1/2} + (u_y + u'_y - \dot{Y})(\frac{\partial u_y}{\partial z})^{1/2}\right\} - V\frac{\partial Pr}{\partial z} + Nz + Fz \quad (14)$$

In this study, frictional forces in each axial direction Fx, Fy, Fz are taken to be zero, for simplification. The restriction conditions for obtaining the effective vertical forces Nx, Ny, Nz are assumed to be given by the ship surface coordinates Xs, Ys, Zs as expressed in the following equations (15) and (16).

$$\frac{dYs}{dXs} = \frac{\dot{Y}}{\dot{X}} \qquad (15)$$

$$\frac{dZs}{dYs} = \frac{\dot{Z}}{\dot{Y}} \qquad (16)$$

(3) Effects of Turbulent Dispersion

The effects of turbulent dispersion on the bubble motion under isotropic flow is included in the Monte Carlo Methods outlined above by imparting a perturbation to the bubble traces by randomly altering directional bubble velocities $u'_x$, $u'_y$, $u'_z$ using random numbers. For example, the directional bubble velocities $u'_x$, $u'_y$, $u'_z$ may be expressed with the magnitude u'(absolute value) of the perturbation and the movement angles $\phi$, $\theta$ as shown in the following equations (17)~(19).

$$u'_x = u'\sin\theta \qquad (17)$$

$$u'_y = u'\cos\theta\,\cos\phi \qquad (18)$$

$$u'_z = u'\cos\theta\,\sin\phi \qquad (19)$$

Here, assume that a magnitude u' of a perturbation follows the first-order Markov process, and the movement angle $\phi$ which is an angle between -180° and 180° is given by a uniform random number between [-180° and 180°], and the movement angle $\theta$ which is an angle between -90° and 90° is given by a uniform random number between [-90° and 90°]. Markov process is a process in which a probability of an event at a certain time is affected by a past probability at a preceding one unit time, and first-order Markov process describes a random phenomenon at a certain time by a first-order equation of random phenomenon at a preceding one unit time.

That is, the magnitude of perturbation $u'_{n+1}$ at (n+1) unit time is given by a first-order equation of the magnitude of a perturbation at n unit time as in the following equation (20).

$$u'_{n+1} = \chi \cdot u'_n + \gamma_n \qquad (20)$$

where, $\chi$ is a constant of a value $0<\chi<1$, $\gamma_n$ is normal random number of a zero average value and a standard deviation $\sigma_0$. Self correlation function R (m, $\Delta$t) of the magnitude $u'_n$ of a perturbation obtained from equation (20) is shown in equation (21) below.

$$R(m, \Delta t) = \frac{\overline{u'_n \cdot u'_{n+m}}}{(u'_n)^2}$$

$$= \frac{\chi^m \overline{(u'_n)^2} + \chi^{m+1}\overline{(u'_n \cdot \gamma_n)}.... + \chi\overline{(u'_n \cdot \gamma_{n+m-1})}}{(u'_n)^2} \tag{21}$$

$$= \chi^m$$

Here, let us consider including an integral time-scale T* which is defined as an attenuation time constant or a life-time of a perturbation in the turbulent boundary layer. The integral time-scale T* is defined in equation (22) where $\Delta t$ is a time increment and $\tau$ is differential time,

$$T^* = \int_0^\infty R(\tau)d\,\tau = \int_0^\infty \chi^{\frac{\tau}{\Delta t}}d\,\tau = -\frac{\Delta t}{\log \chi} \tag{22}$$

so that the constant $\chi$ can be expressed by the time integral T* as follows,

$$\chi = \exp(-\Delta t/T^*) \tag{23}$$

If m = 1 and $\Delta t$ = T (continuous interval), the constant $\chi$ becomes a self correlation function in a continuous system, and is equivalent to Lagrange's self correlation function used in Taylor dispersion theory. It is known that Lagrange's self correlation function matches experimental results well. These considerations lead one to believe that it is justifiable to represent perturbations in a bubbly flow field by a Markov process.

Dispersion of perturbation of a magnitude $u'_n$ obtained from equation (20) is given in equation (24).

$$\sigma_u^2 = \chi^2 \cdot \sigma_u^2 + \sigma_0^2 \tag{24}$$

where $\sigma_u^2$ is an average of squares of directional bubble velocities, which can be expressed in terms of a turbulent flow energy $\kappa$ as in equation (25).

$$\sigma_u^2 = 2\,\kappa \tag{25}$$

From equations (24) and (25), a standard deviation is given as follows.

$$\sigma_0 = (1 - \chi^2)^{1/2} \cdot \sigma_u \tag{26}$$

Continuing on with developing an expression for the integral time-scale T*, an attempt is made to express T* in terms of the energy dissipation factor $\varepsilon$ (m$^2$/s$^3$) and the turbulent flow energy $\kappa$. For this phase of the work, a reference is made to "Science of Turbulent Flow" edited by Tomomasa Tatsumi, Tokyo University Press, p. 372 which shows that the energy dissipation factor $\varepsilon$ can be expressed in terms of a flow direction x and a perturbation component u' (m/s) of the bubble flow velocity u as in equation (27).

$$\varepsilon = 15\nu \overline{\left(\frac{\partial u'}{\partial x}\right)^2} \tag{27}$$

Taylor's scale $\lambda$ (in m) is defined as a radius of curvature of deviation component of the flow velocity u and is given by equation (28).

$$\lambda^2 = \frac{\overline{u'^2}}{\left(\dfrac{\partial u'}{\partial x}\right)^2} \qquad (28)$$

and the turbulent flow energy $\kappa$ is given by equation (29).

$$\kappa \equiv \frac{1}{2}\overline{u'^2} \qquad (29)$$

From these two equations (28) and (29), the following equation is established.

$$\lambda^2 = 30\nu\cdot\kappa/\varepsilon \qquad (30)$$

On the other hand, according to the above-noted reference "Science of Turbulent Flow", Taylor's scale $\lambda$ and the integral time-scale can be related by the following equation (31).

$$T^* = \lambda^2/10\nu \qquad (31)$$

Therefore, from equations (30) and (31), the integral time-scale T* is given by the following expression.

$$T^* = 3\,\kappa\,/\,\varepsilon \qquad (32)$$

(4) Void Fraction

Next, the definition of void fraction will be explained. After computing the equations of bubble motion according to the above-noted equations, a void fraction can be obtained by dividing a volume $v_i$ of bubbles existing in a cell at a given time with the volume of the cell $\Delta V$. For example, in a case shown in Figure 2, there are ten bubbles within a cell so that the void fraction is obtained by equation (33).

$$\mathrm{VOIDFRACTION} = \sum_{i=1}^{10} v_i\,/\,\Delta V \qquad (33)$$

(5) Explanation of Simulation Method

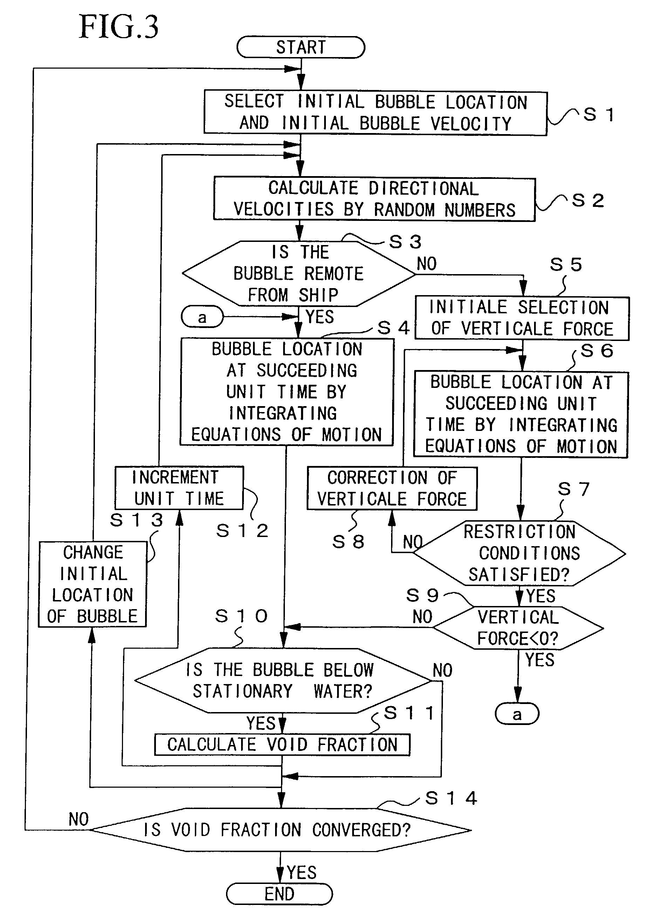

Next, an example of the simulation method will be explained with reference to the flowchart shown in Figure 3. The flowchart indicates various steps in the simulation program which is recorded in a computer.
The simulation is predicated on the use a known model for $\kappa$ - $\varepsilon$ turbulent flow to simulate the flow data on the hull surfaces by means of CFD data. Specifically, the model is used to pre-calculate basic flow parameters based on the shape and size of the ship, cruising speed and the like. The basic flow parameters include: division of the flow fields including the turbulent boundary layer into a suitable number of cells; average values of directional fluid flow velocities $u_x$, $u_y$, $u_z$; time-averaged pressure Pr; turbulent flow energy $\kappa$ and energy dissipation factor $\varepsilon$. In the following example of simulation method, the size of the ship is $L \times B \times d = 7 \times 0.6 \times 0.1$ m and the cruising speed is 3 m/s. Bubble jet outlets are rectangular shaped with 0.3 m width, and twenty-five such outlets arranged in a line along the girth direction at 0.12 m from the bow of the ship.
By substituting the energy dissipation factor $\varepsilon$ and the turbulent flow energy $\kappa$, obtained from the simulation model, into equation (32), integral time-scale T* is computed as 0.1~2.9 s. The unit time (computational increment $\Delta t$)

will be selected so as to be sufficiently smaller than the smallest integral time-scale (0.1 s). In this case, it is taken as 1/10 to yield 0.01 s as the unit time.

Computation is started by initializing the positions of bubbles and initial bubble velocity (step S1). For example, a plurality of jet outlets (25 in this case) in the girth direction of the ship are represented by intersections of the lattice structure. One of these intersections (terminal end, for example) is selected as the initial ejection of a jet bubble. The parameter for bubble location "pr", the time parameter "n" are both set to [0] but the initial velocity may be set to zero or to some other value.

Next, it is assumed that a first bubble of 500 μm diameter is ejected into water (boundary layer), and perturbation computation for the first bubble is performed according to a random number generated (step S2). Specifically, a uniform random number between [-180°, 180°] for movement angle $\phi$, and a uniform random number between [-90°, 90°] for movement angle $\theta$ are generated by each random number generator, and the resulting values are substituted into $\phi$, $\theta$ in equations (17)~(19).

Another random number generator produces normal random numbers having zero average and a standard deviation $\sigma_0$ and are entered in $\gamma_n$ in equation (20). The integral time-scale T* and the unit time $\Delta t$ computed on the basis of the integral time-scale T* are entered in equation (23) to compute a constant $\chi$. This constant $\chi$ is entered in equation (20) together with the magnitude of the perturbation $u'_n$ at a past time (preceding one unit time) obtained from equation (29) to produce the magnitude of a perturbation at a current time $u'_{n+1}$. Directional bubble velocities $u'_x$, $u'_y$, $u'_z$ are thus obtained according to the random numbers generated by various algorithms.

Continuing on with the process, it is examined whether or not the bubble ejected into water in step S1 has left the ship surface (step S3). The results of computation of the directional bubble velocities $u'_x$, $u'_y$, $u'_z$ show where the bubble is now, i.e., which cell is now occupied by a bubble.

In step S3, if it is decided that the bubble has left the ship surface, the bubble location (cell location) in the next instant (succeeding unit time) is computed (step S4) using the equations of motion (9)~(11).

On the other hand, in step S3, if it is decided that the bubble has not left the ship surface, i.e. still sticking to the surface, then initialization of effective vertical forces in the coordinate directions Nx, Ny, Nz is performed (step S5). Then, the bubble location (cell location) in the next instant (succeeding unit time) is computed (step S6) according to the equations of motion (12)~(14), and it is then examined (step S7) whether the computed results from equations (12) ~(14) satisfy the restriction condition equations (15), (16).

If it is decided that the restriction conditions are not satisfied, then the initial values of the effective vertical forces Nx, Ny, Nz in step S5 are corrected (step S8), and the iteration processes for steps S6, S7 are continued until the computed results satisfy the restriction condition equations (15), (16).

When the restriction condition equations (15), (16) are satisfied by a series of iteration of steps S6~S8, the decision in step S7 becomes [yes], and the process advances to examining whether the effective vertical forces Nx, Ny, Nz are less than zero (step S9). If the judgment in step S9 is [yes], this data stream is forwarded to step S4, and if the judgment is [no], then it proceeds to step S10.

The data stream from [no] in step S9 and the computation results in step S4 are merged in step S10 to examine whether the bubble is below the stationary water surface, i.e. whether or not the bubble resides in the water. If the decision in step S10 is [yes], a void fraction in each cell is computed (step S11) according to equation (33). If the decision in step S10 is [no], void fraction is not computed.

After computing the movement of the ejected bubble (first bubble) to an integer time n=1 (a multiple of unit time $\Delta t$ so that n becomes 1), it is now ready to increase the time scale by another integral time. Integer time n is incremented from "0" to "1" (step S12) so that step S2 may be repeated for a second bubble.

In step S2, a new bubble (second bubble) is ejected into water, and a total of two bubbles (first and second bubbles) are now located in the turbulent boundary layer. In the subsequent processing, perturbation computations for the directional bubble velocities are performed using the random number generators. For the first bubble, the old location determined by the steps presented above will be changed to a new location at a succeeding unit time $\Delta t$. For the second bubble, its location at a unit time $\Delta t$ is obtained based on the initial bubble location as described above for the first bubble.

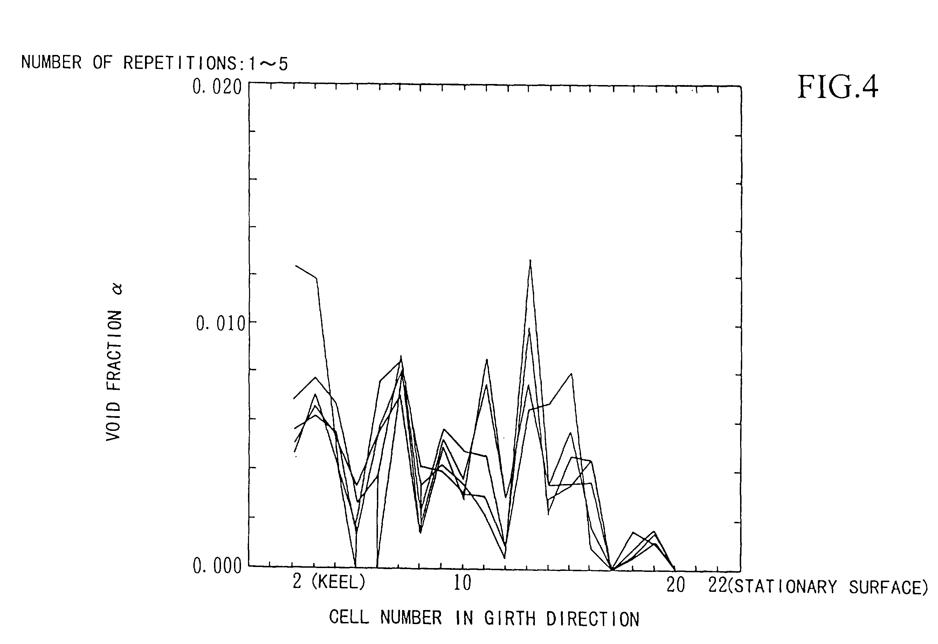

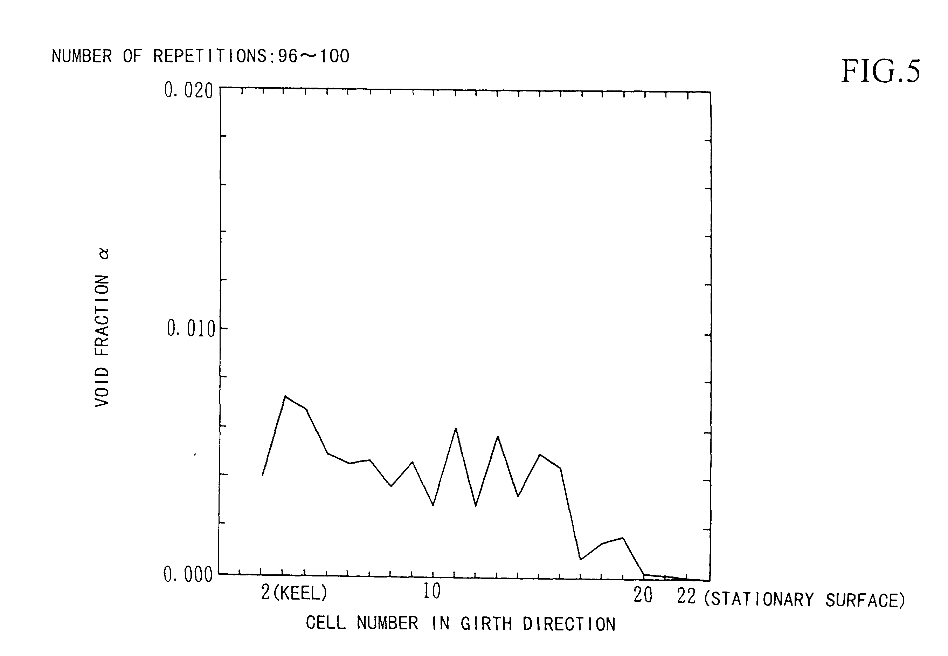

By repeating such steps for a pre-determined number of integer times, a total count of bubbles in each cell is obtained to enable a void fraction to be determined at a certain instant of time (step S11). Figures 4 and 5 show the computed distributions of void fractions in individual cells in the girth direction. The bubbles ejected into the turbulent flow boundary layer move in the opposite direction to the moving direction of the ship, resulting in longitudinal flows of bubbles along the bottom surface. Therefore, Figures 4 and 5 show computed void fraction data on the x-axis and the positions of different cells along the girth (transverse) direction on the y-axis, at various longitudinal positions of the ship. Figure 4 shows the results after 1~5 iteration steps while Figure 5 shows the results after 96~100 iterations.

As seen in Figures 4, the computed results are highly scattered for 1~5 iterations but the results begin to converge when sufficient number of iterative steps are carried out as shown in Figure 5. It can be seen in Figure 5 that after 96~100 iterative steps, void fraction in each cell appears to converge to a constant value.

Bubble locations are thus determined by performing a number of iterative steps (100 for example) for sufficient convergence (step S3 or S6), and corresponding void fractions are computed (step S11). Here, the initial bubble location (jet outlet) is changed (step S13). This means that the initial bubble jet outlet was selected from one of the outlets (lattice intersections) lined up in the girth direction in step S1, but this is changed to an intersection adjacent to the old intersection. The steps S2~S11 are repeated for the second intersection. By repeating this process for 100 bubbles for all the adjacent twenty five jet outlets, corresponding void fractions for all the transverse outlets are computed.

When the computations are thus completed for all the jet outlets, void fractions in the overall submerged surface of the ship are computed in step S14, and the results are examined for convergence. The bubbles ejected from the ship move opposite to the ship in the longitudinal direction of the ship so that it is necessary to examine whether the void fraction results are converging at various longitudinal positions in step S14. If the decision is [yes], the entire simulation process is considered to be completed, and if the decision is [no], the simulation process is continued until the void fractions are converged in all the longitudinal cells.

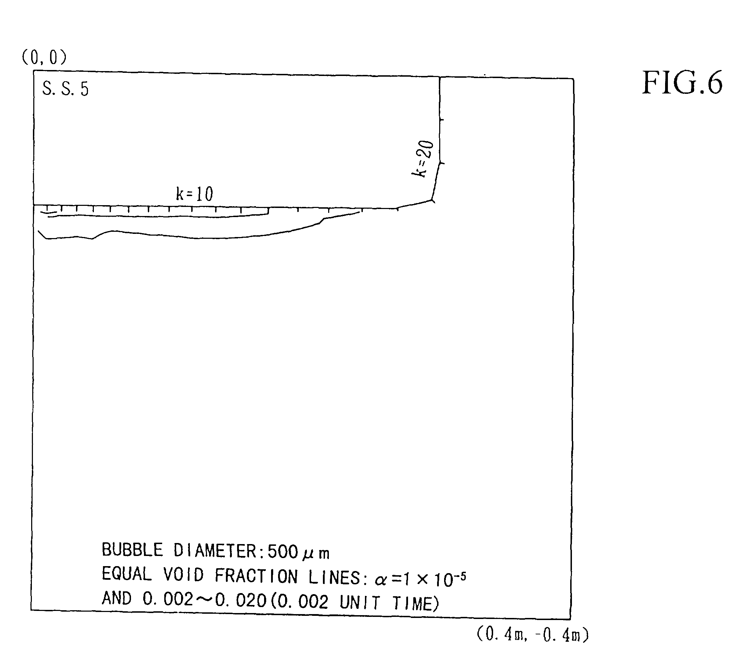

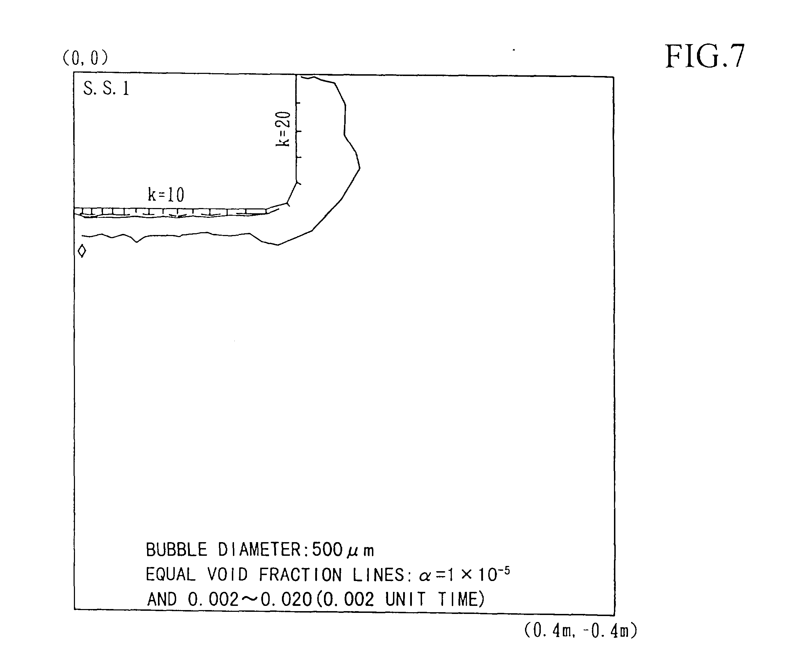

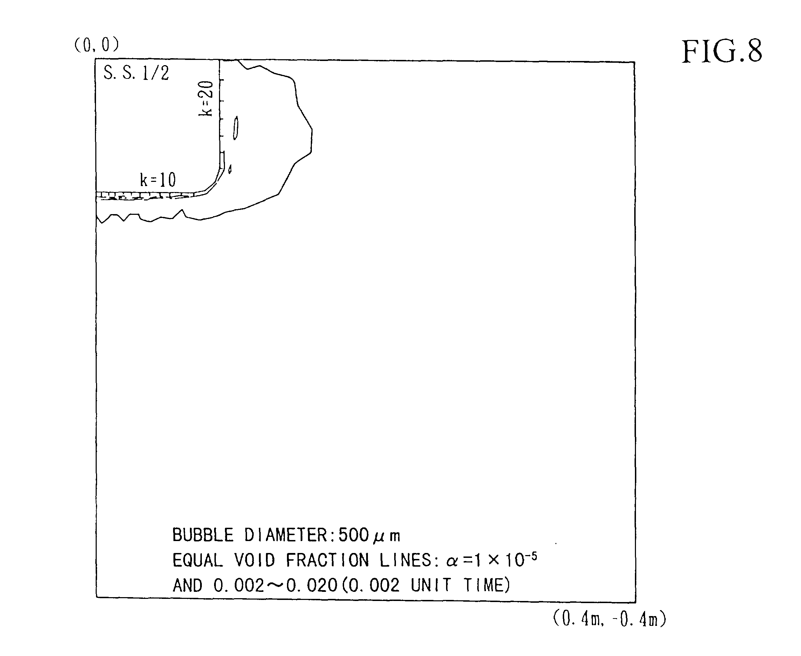

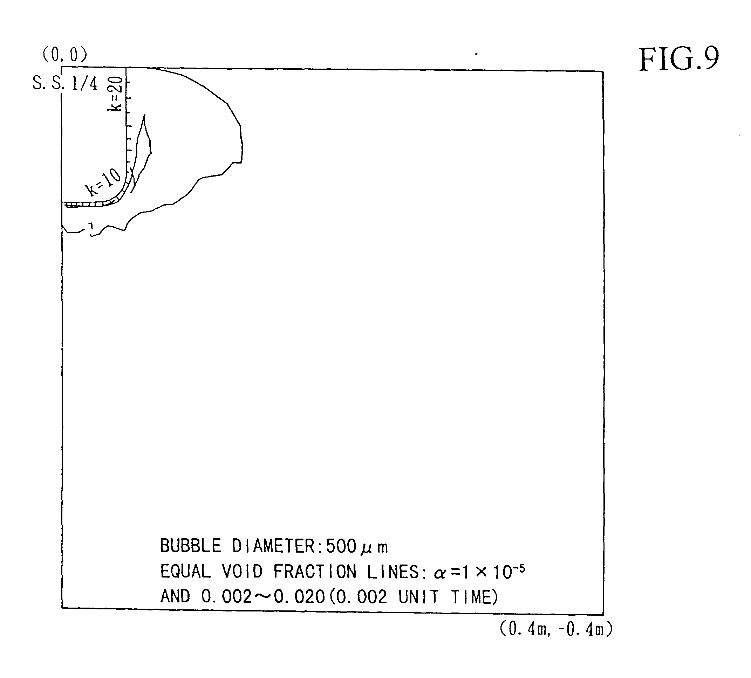

Figures 6~9 show the results of void fraction computation for different simulation section showing S.S. value. In these Figures 6~9, the larger the S.S. value, closer the distribution of void fractions are to the jet outlets. In other words, for small S.S. value, the distribution of void fraction moves to the stern of the ship. The smallest value of the time increment in the contour curves is $1 \times 10^{-5}$, but higher values are in a range of 0.002~0.02 (at 0.002 unit time). At any S.S. value, void fraction peaks are observed on the bottom surface, and towards the stern of the ship, and it is observed also that the bubbles tend to disperse to the lateral hull surfaces, and peak values are higher. This is considered to be the effects of cell spacing in the normal direction to the ship surface and the fluid flow velocity.

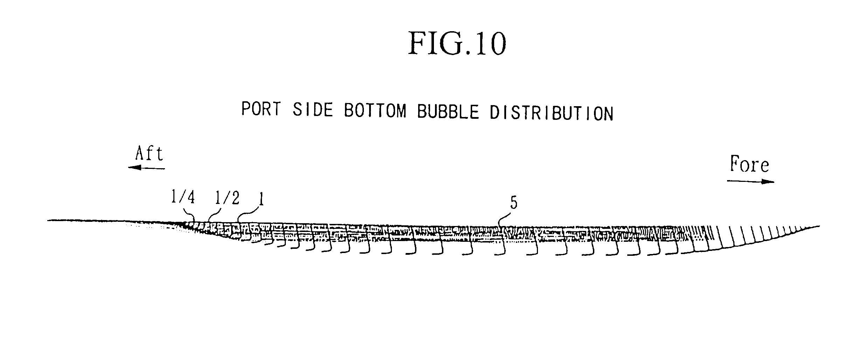

Figure 10 is a bottom view of bubble traces obtained by the computational process. The results indicate that most of the bubbles flow in contact with the bottom surface. This is considered to be a result of low relative velocity of the water flowing along the bottom surface, so that Saffman lift hardly influences the bubble behavior, and in the bottom regions where the turbulent boundary layer is thin, hydrostatic pressure gradient is low and exerts little effect on the bubble dispersion so that lift forces are predominant. The results did not show such large dispersions to cause most of the bottom bubbles to escape from the middle region of the ship to the lateral hull surfaces.

Table 1 below shows computed results of flow fields with no-bubbles near the aft-keel region of the ship at different S.S. value. In this Table 1, data are shown for comparison of average cell spacing at normal to the keel (into water) at one cell spacing and downstream bubble velocities at the same one cell spacing. In Figure 10, it is seen that local void fractions are high in some regions along the bottom surface because the bubbles are forced against the bottom surface. In computed results, the void fractions are averaged by the cell volume so that, in the center region of the bottom section where the cell spacings in the normal direction are large, void fraction peaks become smaller. To improve the results, it is considered necessary to match the cell spacings (into the water) to the bubble diameters.

Table 1

| S.S. | Average lattice spacing at one lattice spacing normal to the keel into water | Downstream flow velocity at one lattice spacing normal to the keel into water |
|---|---|---|
| 5 | 0.0058 m | 2.258 m/s |
| 1 | 0.0042 m | 2.114 m/s |
| 1/2 | 0.0032 m | 2.057 m/s |
| 1/4 | 0.0023 m | 1.979 m/s |

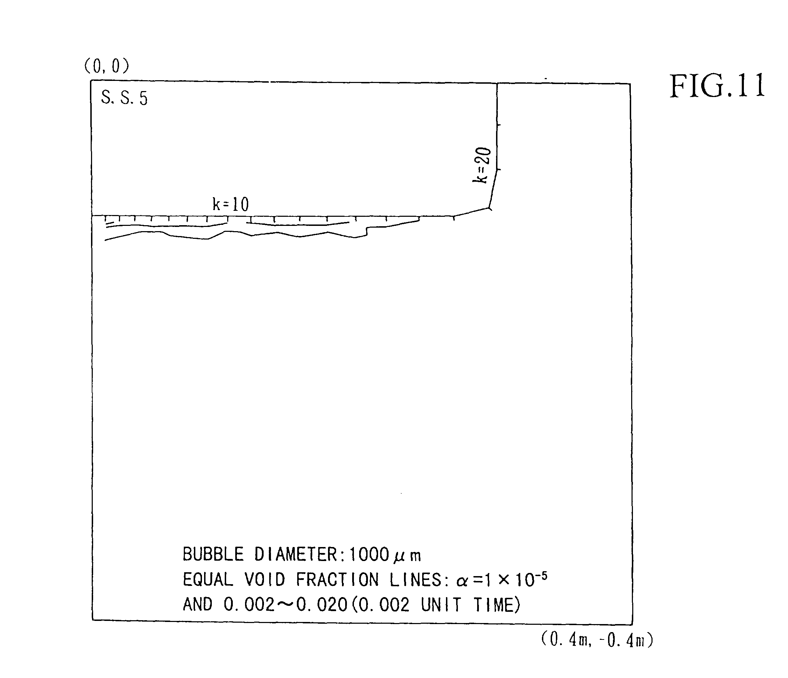

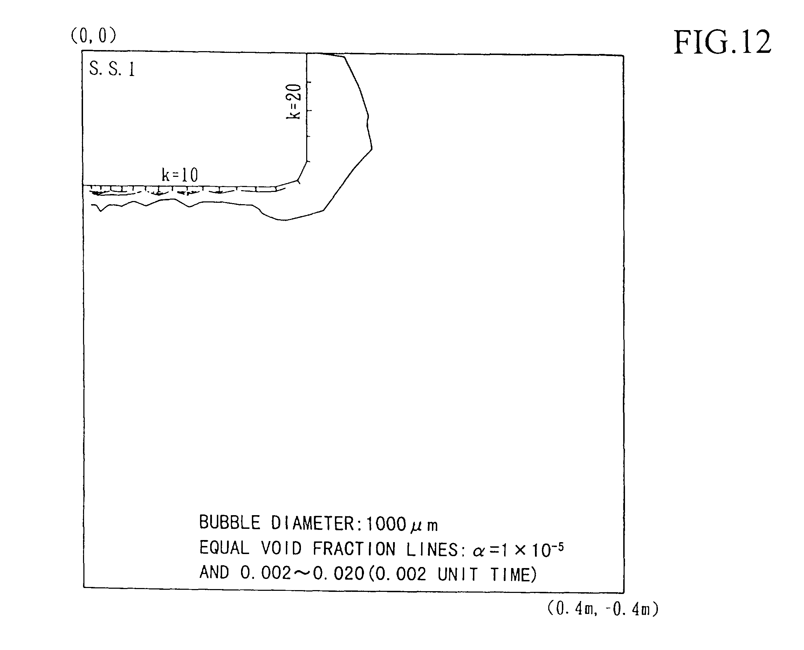

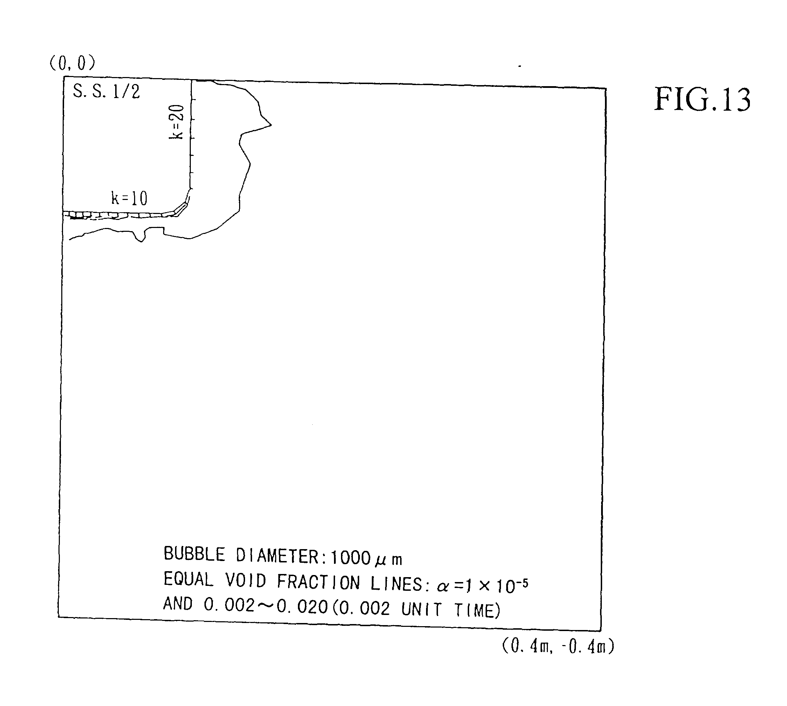

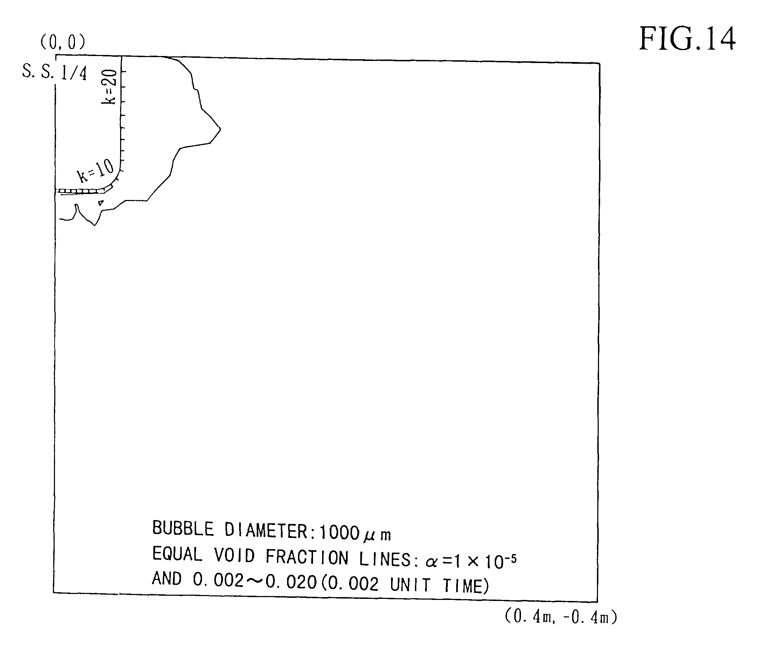

Figures 11~14 show longitudinal cross sectional views of the void fraction distribution for bubbles of 1,000 μm radius for comparison with Figures 6~9 showing the same for bubbles of 500 μm radius. On the bottom surface of the ship, void fraction distribution for bubbles of 1,000 μm show less dispersion in the girth direction than bubbles of 500 μm, and the peak value for 1,000 μm bubbles is higher than the peak value for 500 μm bubbles. This is considered to be an effect of the number of jet outlets. The tendency for the bubbles to stick to the bottom surface does not appear to be significantly different for both diameters.

**Claims**

1. A simulation method for simulating bubbles enveloping a ship by computing distribution data of bubbles generated by jetting a gas from a cruising ship into water, comprising the steps of:

   a. dividing a flow field including a turbulent boundary layer formed about a submerged surface of said ship into three-dimensional orthogonal lattices to form cells and calculating a turbulent flow energy, an energy dissipation factor and an average fluid velocity in each of said cells;

b. ejecting a bubble into said turbulent flow layer with a given initial bubble velocity from a given jet outlet at a given instant of time;

c. calculating directional bubble velocities in each of said cells according to said turbulent flow energy, said energy dissipation factor, said average fluid velocity and random numbers;

d. calculating a bubble location at a succeeding unit time by solving equations of motion according to said directional bubble velocities and average fluid velocity;

e. calculating a void fraction in each of said cells according to said bubble location at said succeeding unit time;

f. repeating said step c to said step e for another bubble for a given number of iterations until an integer time is reached by incrementing a time parameter by a unit time; and

g. calculating distribution of void fractions in all cells to represent an overall distribution of bubbles at said integer time, and terminating computation when it is decided that said distribution of bubbles is converging.

2. A method according to claim 1, wherein prior to executing said step d, it is examined whether or not said bubble has left a ship surface, and if it is decided that said bubble is sticking to said ship surface, said bubble location at said succeeding unit time is calculated according to equations of motion allowing for a vertical resultant force.

3. A method according to one of claim 1 or 2, wherein, after completing said step f, a plurality of jet outlets are introduced, and said step c to said step fare repeated.

4. A method according to claims 1, wherein said directional bubble velocities are given by equations (17), (18), and (19) according to a perturbation u' determined by a first-order Markov process, an angle $\phi$ given by a uniform random number between (-180°, 180°) and an angle $\theta$ given by a uniform random number between (-90°, 90°):

$$u'_x = u'\sin\theta \qquad (17);$$

$$u'_y = u'\cos\theta \cos\phi \qquad (18)$$

and

$$u'_z = u'\cos\theta \sin\phi \qquad (19)$$

5. A method according to claims 2, wherein said directional bubble velocities are given by equations (17), (18), and (19) according to a perturbation u' determined by a first-order Markov process, an angle $\phi$ given by a uniform random number between (-180°, 180°) and an angle $\theta$ given by a uniform random number between (-90°, 90°):

$$u'_x = u'\sin\theta \qquad (17);$$

$$u'_y = u'\cos\theta \cos\phi \qquad (18)$$

and

$$u'_z = u'\cos\theta \sin\phi \qquad (19).$$

6. A method according to claims 3, wherein said directional bubble velocities are given by equations (17), (18), and (19) according to a perturbation u' determined by a first-order Markov process, an angle $\phi$ given by a uniform random number between (-180°, 180°) and an angle $\theta$ given by a uniform random number between (-90°, 90"):

$$u'_x = u'\sin\theta \qquad (17);$$

$$u'_y = u'\cos\theta\,\cos\phi \qquad\qquad (18)$$

and

$$u'_z = u'\cos\theta\,\sin\phi \qquad\qquad (19).$$

7. An apparatus for simulating bubbles enveloping a ship by computing distribution data of bubbles generated by jetting a gas from a cruising ship into water, comprised by means to carry out the steps of:

    a. dividing a flow field including a turbulent boundary layer formed about a submerged surface of said ship into three-dimensional orthogonal lattices to form cells and calculating a turbulent flow energy, an energy dissipation factor and an average fluid velocity in each of said cells;
    b. ejecting a bubble into said turbulent flow layer with a given initial bubble velocity from a given jet outlet at a given instant of time;
    c. calculating directional bubble velocities in each of said cells according to said turbulent flow energy, said energy dissipation factor, said average fluid velocity and random numbers;
    d. calculating a bubble location at a succeeding unit time by solving equations of motion according to said directional bubble velocities and average fluid velocity;
    e. calculating a void fraction in each of said cells according to said bubble location at said succeeding unit time;
    f. repeating said step c to said step e for another bubble for a given number of iterations until an integer time is reached by incrementing a time parameter by a unit time; and
    g. calculating distribution of void fractions in all cells to represent an overall distribution of bubbles at said integer time, and terminating computation when it is decided that said distribution of bubbles is converging.

8. An apparatus according to claim 7, wherein prior to executing said step d, it is examined whether or not said bubble has left a ship surface, and if it is decided that said bubble is sticking to said ship surface, said bubble location at said succeeding unit time is calculated according to equations of motion allowing for a vertical resultant force.

9. An apparatus according to one of claim 7 or 8, wherein, after completing said step f, a plurality of jet outlets are introduced, and said step c to said step f are repeated.

10. An apparatus according to claims 7, wherein said directional bubble velocities are given by equations (17), (18), and (19) according to a perturbation u' determined by a first-order Markov process, an angle $\phi$ given by a uniform random number between (-180°, 180°) and an angle $\theta$ given by a uniform random number between (-90°, 90°):

$$u'_x = u'\sin\theta \qquad\qquad (17);$$

$$u'_y = u'\cos\theta\,\cos\phi \qquad\qquad (18)$$

and

$$u'_z = u'\cos\theta\,\sin\phi \qquad\qquad (19).$$

11. An apparatus according to claims 8, wherein said directional bubble vclocities are given by equations (17), (18), and (19) according to a perturbation u' determined by a first-order Markov process, an angle $\phi$ given by a uniform random number between (-180°, 180") and an angle $\theta$ given by a uniform random number between (-90°, 90°):

$$u'_x = u'\sin\theta \qquad\qquad (17);$$

$$u'_y = u'\cos\theta\,\cos\phi \qquad\qquad (18)$$

and

$$u'_z = u'\cos\theta\,\sin\phi \qquad\qquad (19).$$

12. An apparatus according to claims 7, wherein said directional bubble velocities are given by equations (17), (18), and (19) according to a perturbation u' determined by a first-order Markov process, an angle $\phi$ given by a uniform random number between (-180°, 180°) and an angle $\theta$ given by a uniform random number between (-90°, 90°):

$$u'_x = u'\sin\theta \qquad\qquad (17);$$

$$u'_y = u'\cos\theta\,\cos\phi \qquad\qquad (18)$$

and

$$u'_z = u'\cos\theta\,\sin\phi \qquad\qquad (19).$$

13. A computer-readable memory medium recording a program to simulate bubbles enveloping a ship by computing distribution data of bubbles generated by jetting a gas from a cruising ship into water, said program comprising the steps of:

   a. dividing a flow field including a turbulent boundary layer formed about a submerged surface of said ship into three-dimensional orthogonal lattices to form cells and calculating a turbulent flow energy an energy dissipation factor and an average fluid velocity in each of said cells;
   b. ejecting a bubble into said turbulent flow layer with a given initial bubble velocity from a given jet outlet at a given instant of time;
   c. calculating directional bubble velocities in each of said cells according to said turbulent flow energy, said energy dissipation factor, said average fluid velocity and random numbers;
   d. calculating a bubble location at a succeeding unit time by solving equations of motion according to said directional bubble velocities and average fluid velocity;
   e. calculating a void fraction in each of said cells according to said bubble location at said succeeding unit time;
   f. repeating said step c to said step e for another bubble for a given number of iterations until an integer time is reached by incrementing a time parameter by a unit time; and
   g. calculating distribution of void fractions in all cells to represent an overall distribution of bubbles at said integer time, and terminating computation when it is decided that said distribution of bubbles is converging.

14. A computer-readable memory medium according to claim 13, wherein prior to executing said step d, it is examined whether or not said bubble has left a ship surface, and if it is decided that said bubble is sticking to said ship surface, said bubble location at said succeeding unit time is calculated according to equations of motion allowing for a vertical resultant force.

15. A computer-readable memory medium according to one of claim 13 or 14, wherein, after completing said step f, a plurality of jet outlets are introduced, and said step c to said step fare repeated.

16. A computer-readable memory medium according to claims 13, wherein said directional bubble velocities are given by equations (17), (18), and (19) according to a perturbation u' determined by a first-order Markov process, an angle $\phi$ given by a uniform random number between (-180°, 180°) and an angle $\theta$ given by a uniform random number between (-90°, 90°):

$$u'_x = u'\sin\theta \qquad\qquad (17);$$

$$u'_y = u'\cos\theta\,\cos\phi \qquad\qquad (18)$$

and

$$u'_z = u'\cos\theta\,\sin\phi \qquad (19).$$

**17.** A computer-readable memory medium according to claims 14, wherein said directional bubble velocities are given by equations (17), (18), and (19) according to a perturbation u' determined by a first-order Markov process, an angle $\phi$ given by a uniform random number between (-180°, 180°) and an angle $\theta$ given by a uniform random number between (-90°, 90°):

$$u'_x = u'\sin\theta \qquad (17);$$

$$u'_y = u'\cos\theta\,\cos\phi \qquad (18)$$

and

$$u'_z = u'\cos\theta\,\sin\phi \qquad (19).$$

**18.** A computer-readable memory medium according to claims 15, wherein said directional bubble velocities are given by equations (17), (18), and (19) according to a perturbation u' determined by a first-order Markov process, an angle $\phi$ given by a uniform random number between (-180°, 180°) and an angle $\theta$ given by a uniform random number between (-90°, 90°):

$$u'_x = u'\sin\theta \qquad (17);$$

$$u'_y = u'\cos\theta\,\cos\phi \qquad (18)$$

and

$$u'_z = u'\cos\theta\,\sin\phi \qquad (19).$$

# FIG.1

PLUMB VERTICAL

VELOCITY

# FIG.2

BUBBLE        CELL

## FIG.3

```
                              ( START )
                                  │
                                  ▼
                  ┌──────────────────────────────────┐
                  │  SELECT INITIAL BUBBLE LOCATION   │ ～ S 1
                  │   AND INITIAL BUBBLE VELOCITY     │
                  └──────────────────────────────────┘
                                  │
                                  ▼
                  ┌──────────────────────────────────┐
                  │     CALCULATE DIRECTIONAL         │ ～ S 2
                  │  VELOCITIES BY RANDOM NUMBERS     │
                  └──────────────────────────────────┘
                                  │
                                  ▼
                        ⟨ IS THE              ⟩  S 3
                        ⟨ BUBBLE REMOTE       ⟩ ──NO──┐
                        ⟨ FROM SHIP           ⟩       │
                                  │ YES               ▼
         ( a )───────────────────┐                ┌──────────────────────┐
                                 │ S 4            │  INITIALE SELECTION  │ S 5
                  ┌──────────────────────┐        │  OF VERTICALE FORCE  │
                  │   BUBBLE LOCATION     │        └──────────────────────┘
                  │   AT SUCCEEDING       │                   │
                  │   UNIT TIME BY        │                   ▼
                  │   INTEGRATING         │        ┌──────────────────────┐
                  │ EQUATIONS OF MOTION   │        │  BUBBLE LOCATION AT   │ S 6
                  └──────────────────────┘         │  SUCCEEDING UNIT      │
                                 │                 │  TIME BY INTEGRATING  │
  ┌──────────────┐               │                 │  EQUATIONS OF MOTION  │
  │  INCREMENT   │    ┌──────────────────┐         └──────────────────────┘
  │  UNIT TIME   │    │  CORRECTION OF   │                    │
  └──────────────┘    │  VERTICALE FORCE │                    ▼
    S 1 3     S 1 2   └──────────────────┘          ⟨ RESTRICTION    ⟩ S 7
                          S 8      NO ◄──────────── ⟨ CONDITIONS     ⟩
  ┌──────────┐                                       ⟨ SATISFIED?    ⟩
  │ CHANGE   │                                            │ YES
  │ INITIAL  │                            S 9 ── NO  ⟨ VERTICAL      ⟩
  │ LOCATION │                                       ⟨ FORCE<0?      ⟩
  │ OF BUBBLE│          S 1 0                              │ YES
  └──────────┘                                             ▼
                  ⟨ IS THE BUBBLE BELOW    ⟩ ──NO──►     ( a )
                  ⟨ STATIONARY  WATER?     ⟩
                         │ YES       S 1 1
                  ┌──────────────────────┐
                  │  CALCULATE VOID FRACTION │
                  └──────────────────────┘
                             │
                             ▼
     NO ◄──── ⟨ IS VOID FRACTION CONVERGED? ⟩  S 1 4
                             │ YES
                             ▼
                         ( END )
```

EP 0 911 254 A2

NUMBER OF REPETITIONS:1~5

FIG.4

VOID FRACTION α

0.020

0.010

0.000

2 (KEEL)     10     20     22(STATIONARY SURFACE)

CELL NUMBER IN GIRTH DIRECTION

NUMBER OF REPETITIONS:96～100

FIG.5

VOID FRACTION α

0.020

0.010

0.000

2(KEEL)　　　　　10　　　　　　　20　22 (STATIONARY SURFACE)

CELL NUMBER IN GIRTH DIRECTION

EP 0 911 254 A2

EP 0 911 254 A2

(0, 0)

## FIG.6

S. S. 5

k=20

k=10

BUBBLE DIAMETER:500 $\mu$ m
EQUAL VOID FRACTION LINES: $\alpha$ =1 × 10$^{-5}$
AND 0.002~0.020(0.002 UNIT TIME)

(0.4m, -0.4m)

FIG.7

(0, 0)

S. S. 1

k=20

k=10

◇

BUBBLE DIAMETER:500μm
EQUAL VOID FRACTION LINES: $\alpha = 1 \times 10^{-5}$
AND 0.002~0.020(0.002 UNIT TIME)

(0.4m, -0.4m)

EP 0 911 254 A2

EP 0 911 254 A2

FIG.8

(0, 0)

S. S. 1/2

k=20

k=10

BUBBLE DIAMETER:500 $\mu$ m
EQUAL VOID FRACTION LINES: $\alpha$ =1 $\times$ 10$^{-5}$
AND 0.002~0.020(0.002 UNIT TIME)

(0.4m, -0.4m)

FIG.9

(0, 0)

S. S. 1/4

k=20

k=10

1

BUBBLE DIAMETER: 500 $\mu$m

EQUAL VOID FRACTION LINES: $\alpha = 1 \times 10^{-5}$

AND 0.002~0.020 (0.002 UNIT TIME)

(0.4m, -0.4m)

EP 0 911 254 A2

# FIG.10

PORT SIDE BOTTOM BUBBLE DISTRIBUTION

EP 0 911 254 A2

FIG.11

(0, 0)

S. S. 5

k=20

k=10

BUBBLE DIAMETER:1000 μm
EQUAL VOID FRACTION LINES: $\alpha = 1 \times 10^{-5}$
AND 0.002~0.020 (0.002 UNIT TIME)

(0.4m, -0.4m)

EP 0 911 254 A2

FIG.12

EP 0 911 254 A2

(0, 0)

S. S. 1

k=20

k=10

BUBBLE DIAMETER : 1000 $\mu$ m
EQUAL VOID FRACTION LINES : $\alpha = 1 \times 10^{-5}$
AND 0. 002~0. 020 (0. 002 UNIT TIME)

(0. 4m, -0. 4m)

EP 0 911 254 A2

## FIG.13

(0, 0)

S. S. 1/2

k=20

k=10

BUBBLE DIAMETER: 1000 $\mu$m
EQUAL VOID FRACTION LINES: $\alpha = 1 \times 10^{-5}$
AND 0.002~0.020 (0.002 UNIT TIME)

(0.4m, -0.4m)

EP 0 911 254 A2

FIG.14

(0, 0)

S. S. 1/4

k=20

k=10

BUBBLE DIAMETER:1000 μm
EQUAL VOID FRACTION LINES: $\alpha = 1 \times 10^{-5}$
AND 0.002~0.020(0.002 UNIT TIME)

(0.4m, -0.4m)